# FASCICULE DE BREVET EUROPEEN

(11) **EP 1 467 313 B1**
(45) Date de publication et mention de la délivrance du brevet: **08.04.2009**
(21) Numéro de dépôt: 04300095.9
(22) Date de dépôt: 23.02.2004
(51) Int. Cl.: G06K 19/073

(54) **Procédé et dispositif de sélection de mode de fonctionnement d'un circuit intégré**
Verfahren und Vorrichtung zur Auswahl der Betriebsart einer Integrierten Schaltung
Method and device for selecting the operating mode of an integrated circuit

(30) Priorité: 24.02.2003 FR 0302227
(43) Date de publication de la demande: 13.10.2004
(73) Titulaire: STMicroelectronics S.A., 92120 Montrouge (FR)
(72) Inventeur: Teglia, Yannick, 13011 Marseille (FR)
(74) Mandataire: de Beaumont, Michel

(56) Documents cités:
- EP-A- 0 255 414
- EP-A- 0 610 886
- DE-A- 19 711 478
- FR-A- 2 666 671
- US-A- 4 521 853
- US-A1- 2002 047 049

## Description

La présente invention concerne la sélection d'un mode de fonctionnement d'un circuit intégré parmi plusieurs modes, en particulier de manière à interdire ou sélectionner de manière définitive un mode de fonctionnement prédéterminé.

Des circuits intégrés connus comportent un dispositif de sélection entre un mode réservé donnant accès à toutes les fonctionnalités du circuit, et un mode utilisateur donnant accès à un nombre limité des fonctionnalités du circuit. Un tel dispositif sert, par exemple, à mettre initialement un circuit en fonctionnement dans un mode réservé permettant de tester le circuit et d'y stocker des informations confidentielles. Le dispositif de sélection peut ensuite être verrouillé pour autoriser seulement la mise en fonctionnement du circuit dans un mode utilisateur ne permettant pas de lire ou de modifier les informations confidentielles stockées.

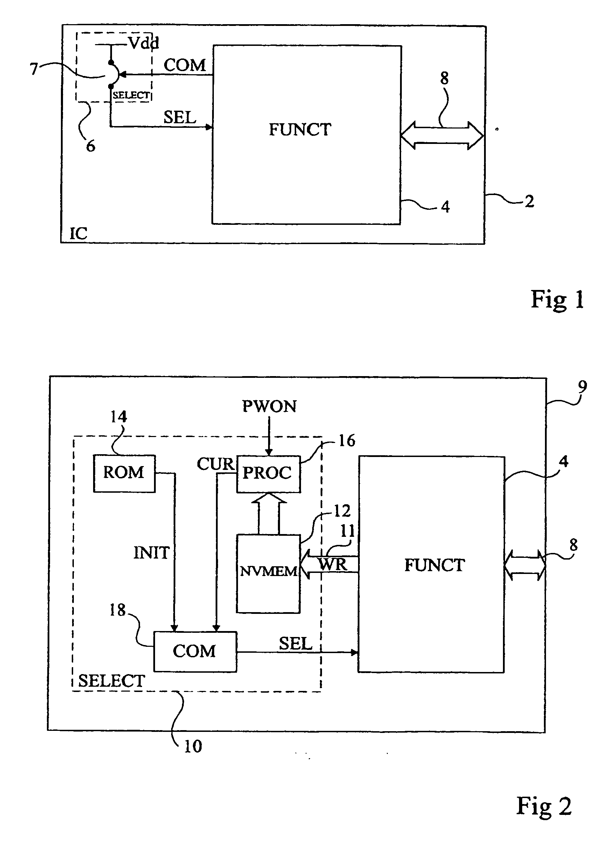

La figure 1 représente schématiquement un circuit intégré 2 (IC) destiné à une application sécurisée porté par exemple par une carte à puce et comportant un bloc fonctionnel 4 (FUNCT). Le bloc 4 fournit un signal de commande COM à une borne d'entrée d'un dispositif de sélection 6 (SELECT) et reçoit un signal de sélection SEL de la borne de sortie du dispositif 6. Le dispositif 6 comprend un fusible 7 connecté entre un potentiel d'alimentation Vdd et la borne de sortie du dispositif 6, dont la fusion est commandée par la réception d'un signal COM actif. L'environnement du circuit 2, relié au bloc 4 par un accès d'entrée/sortie 8, n'est pas représenté.

Le bloc 4 est prévu pour fonctionner dans le mode réservé s'il reçoit un signal SEL actif, c'est-à-dire tant que le fusible 7 n'est pas fondu, et dans le mode utilisateur sinon. Un système équivalent peut également utiliser un anti-fusible qui ferme un circuit pour rendre une fonction inactive. Le signal COM est inactif tant qu'un opérateur ne commande pas son activation. Initialement, c'est-à-dire après fabrication du circuit, le fusible 7 n'est pas fondu et le bloc 4 fonctionne dans le mode réservé. Un opérateur peut tester et programmer le bloc 4 par l'intermédiaire de l'accès 8. Une fois le test et la programmation du bloc 4 terminés, l'opérateur commande au bloc 4 de fournir un signal COM actif à la borne d'entrée du dispositif 6 pour faire fondre le fusible 7 et entraîner une sélection définitive du mode utilisateur.

Le fusible 7 est réalisé dans le circuit intégré pour interdire à un utilisateur de réactiver le mode réservé par une manipulation du signal SEL. Malheureusement, un tel fusible peut dans certaines conditions se reformer après avoir été fondu. On perd alors le caractère non volatil de la programmation de l'état du signal SEL opérée par le fusible.

De plus, commander la fusion d'un fusible nécessite une puissance importante, ce qui impose au bloc 4 ou au dispositif 6 de comporter des éléments de puissance. De tels éléments accroissent la consommation et la taille du circuit.

En outre, la réalisation de fusibles dans un circuit intégré impose d'utiliser certaines étapes de fabrication, par exemple des étapes de dépôt d'un oxyde tunnel, qui ne sont pas disponibles dans tous les processus de fabrication de circuits intégrés, par exemple les circuits intégrés à mémoire ferromagnétique. Il n'est ainsi actuellement pas possible de réaliser un circuit à mémoire ferromagnétique muni d'un dispositif de sélection de mode de fonctionnement tel qu'en figure 1.

Un objet de la présente invention est de prévoir un dispositif de sélection de mode de fonctionnement d'un circuit intégré qui soit verrouillable de façon définitive et qui ne comporte aucun fusible ou anti-fusible présentant des problèmes analogues.

Un autre objet de la présente invention est de prévoir un tel dispositif qui occupe une surface réduite.

Un autre objet de la présente invention est de prévoir un tel dispositif qui ait une consommation de puissance réduite.

La présente invention vise également un circuit intégré comportant un tel dispositif de sélection, et un procédé de fabrication d'un tel circuit.

La présente invention vise également un procédé de sélection de mode de fonctionnement d'un circuit intégré.

Le document FR-A-2 666 671 décrit un procédé de gestion d'un programme d'application dans un support à microcircuit dans lequel le déroulement du programme est conditionné à la comparaison d'une signature du programme et d'un code secret stocké dans une mémoire avec une signature calculée lors de l'exécution de ce programme.

Le document EP-0 610 886 décrit un système d'interdiction d'un retour en mode test d'un microprocesseur une fois qu'une donnée d'expédition est écrite dans une région particulière d'une EEPROM.

Le document US-A-2002/0047049 décrit un dispositif d'authentification d'une carte à puce dans lequel un nombre aléatoire est utilisé dans une phase de personnalisation pour définir une donnée de personnalisation.

Pour atteindre ces objets, ainsi que d'autres, la présente invention prévoit un dispositif de sélection de mode de fonctionnement d'un circuit intégré selon la revendication 1.

Selon un mode de réalisation de la présente invention, le moyen pour évaluer la différence existant entre les signatures calcule les différences des nombres d'occurrences respectives de chacune de la pluralité de valeurs dans les première et seconde signatures et fait la somme des valeurs absolues des différences.

L'invention prévoit également un circuit intégré comportant un dispositif de sélection, fonctionnant dans un premier mode tant que le signal de sélection de mode de fonctionnement est actif, et dans un deuxième mode sinon.

Selon un mode de réalisation de la présente invention, au moins une partie de la mémoire du dispositif de sélection est une mémoire ou zone mémoire qui ne peut être écrite que dans le premier mode de fonctionnement.

Selon un mode de réalisation de la présente invention, la seconde signature est calculée de nouveau à chaque mise sous tension du circuit.

L'invention prévoit également un procédé de sélection de mode de fonctionnement d'un circuit intégré selon la revendication 6.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente schématiquement un circuit intégré muni d'un dispositif classique de sélection de mode de fonctionnement ;
la figure 2 représente schématiquement un circuit intégré muni d'un dispositif de sélection de mode de fonctionnement selon un mode de réalisation de la présente invention ;
la figure 3 représente schématiquement un circuit intégré muni d'un dispositif de sélection de mode de fonctionnement selon une variante de mode de réalisation de la présente invention ; et
la figure 4 représente schématiquement un exemple de structure de la mémoire programmable et de la mémoire morte d'un mode de réalisation d'un dispositif selon la présente invention.

De mêmes références représentent de mêmes éléments aux différentes figures. Seuls les éléments nécessaires à la compréhension de l'invention ont été représentés.

La figure 2 représente schématiquement un circuit intégré 9 (IC) dont un bloc fonctionnel 4 (FUNCT) est relié à un environnement non représenté par un accès d'entrée/sortie 8. Le bloc 4 est relié par un bus d'écriture (WR) à un dispositif de sélection 10 (SELECT) selon la présente invention, et reçoit un signal SEL du dispositif 10. Selon un mode de réalisation de la présente invention, le dispositif 10 comprend une mémoire non-volatile 12 (NVMEM) programmable après fabrication, par exemple de type FeRAM, recevant le bus d'écriture 11. La mémoire 12 n'est pas une mémoire morte. Un moyen de stockage tel qu'une mémoire morte 14 (ROM) stocke une première signature INIT représentative du contenu initial de la mémoire 12, après fabrication et avant programmation de la mémoire 12. La manière dont le contenu initial de la mémoire 12 est évalué est décrite par la suite. Un moyen de calcul 16 (PROC) est disposé pour, de manière commandable, lire la mémoire 12 et produire une seconde signature CUR représentative du contenu courant de la mémoire 12. Un moyen de commande 18 (COM) est disposé de manière à recevoir les signatures INIT et CUR, à calculer la différence existant entre les deux signatures, et à produire un signal SEL actif tant que la différence est inférieure à un seuil prédéterminé, et inactif sinon.

Le bloc 4 fonctionne comme précédemment dans le mode réservé s'il reçoit un signal SEL actif et dans le mode utilisateur sinon. Tant qu'aucune écriture n'a eu lieu dans la mémoire 12, la signature CUR est sensiblement égale à la signature INIT et le signal SEL est actif. Le bloc 4 fonctionne ainsi initialement dans le mode réservé. Pour sélectionner le mode utilisateur, un opérateur peut commander au bloc 4 d'écrire une valeur prédéterminée dans la mémoire 12. La valeur prédéterminée est choisie de telle manière que la signature CUR est différente (à une tolérance près, prédéfinie) de la signature INIT, et que le moyen 18 inactive le signal SEL. Par exemple, le moyen 16 est commandé pour calculer la signature CUR à chaque mise sous tension du circuit 9, à la réception d'un signal de mise sous tension PWON produit par des moyens non représentés.

De préférence, le bloc 4 interdit toute écriture dans la mémoire 12 en dehors du mode réservé. De cette manière il devient impossible, une fois dans le mode utilisateur, d'écrire frauduleusement dans la mémoire 12 pour modifier la signature CUR et revenir dans le mode réservé. La sélection du mode utilisateur est donc définitive.

La présente invention prévoit ainsi un dispositif de sélection de mode de fonctionnement d'un circuit intégré verrouillable de façon définitive et qui ne comporte aucun fusible ou anti-fusible.

Un autre avantage de l'invention est qu'un tel dispositif peut être réalisé dans toute technologie permettant la fabrication de mémoires programmables non volatiles, notamment des mémoires ferromagnétiques.

Un autre avantage de l'invention est qu'un tel dispositif ne requiert aucun élément de puissance pour griller un éventuel fusible.

La présente invention a été décrite en relation avec un mode de réalisation dans lequel la mémoire programmable non volatile est distincte du bloc fonctionnel. Toutefois, pour des raisons pratiques, la mémoire programmable du dispositif de sélection peut être une zone réservée d'une mémoire programmable du bloc fonctionnel. De manière avantageuse, la mémoire programmable du bloc de sélection peut être une zone d'une mémoire programmable du bloc fonctionnel destinée à stocker des logiciels ou des données confidentiels accessibles exclusivement dans le mode réservé.

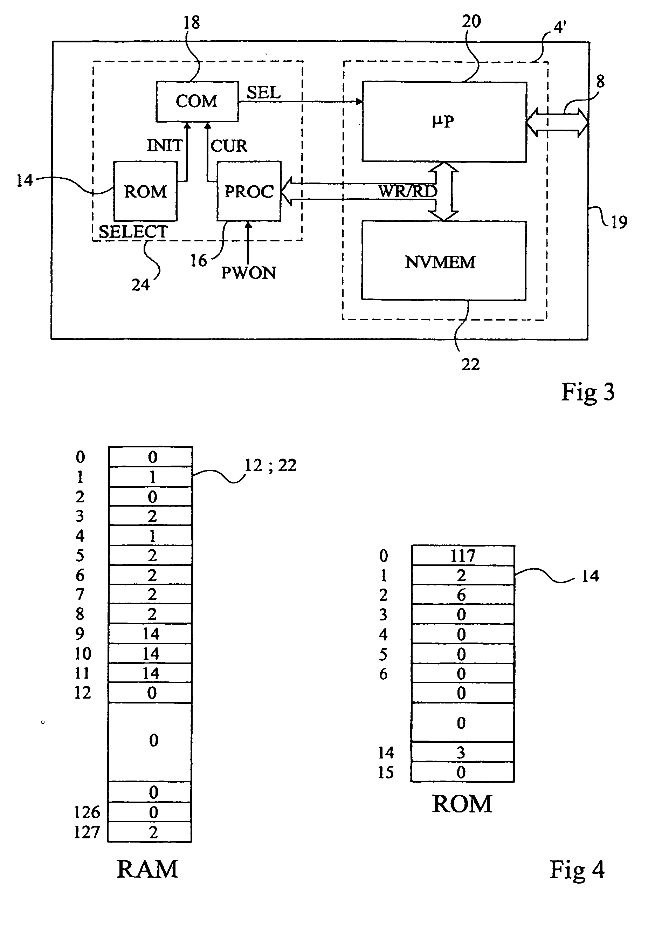

Selon une variante de réalisation qui va être décrite en relation avec la figure 3, le dispositif de sélection peut également comparer des signatures INIT et CUR correspondant au contenu de toute la mémoire programmable du bloc fonctionnel.

En figure 3, un circuit intégré 19 (IC) comporte un bloc fonctionnel 4' (FUNCT). Le bloc 4' comporte un microprocesseur 20 (µP) relié à un environnement non représenté par un accès d'entrée/sortie 8 et par un bus d'écriture/lecture (WR/RD) à une mémoire non volatile 22 (NVMEM) programmable après fabrication. Le bloc 4', qui a sensiblement le même fonctionnement que le bloc 4 précédent, reçoit un signal SEL d'un dispositif de sélection 24 (SELECT). Selon cette variante, le dispositif 24 comprend, comme le dispositif 10 de la figure 2, une mémoire morte 14 et des moyens de calcul 16 et de commande 18. Cependant, la mémoire morte 14 stocke une signature INIT représentative du contenu initial de la mémoire 22, après fabrication et avant programmation, et le moyen 16 est relié au bus WR/RD de manière à pouvoir calculer, de manière commandable, une signature CUR représentative d'un contenu courant de la mémoire 22.

Tant qu'aucune écriture n'a eu lieu dans la mémoire 22, la signature CUR est sensiblement égale à la signature INIT, le signal SEL est actif et le bloc 4 fonctionne dans le mode réservé. Toute écriture dans la mémoire 22 a pour effet qu'à la mise sous tension suivante, la signature CUR sera différente de la signature INIT. Le moyen 18 inactivera alors le signal SEL et le bloc 4 ne pourra plus fonctionner dans le mode réservé.

Comme on l'a vu précédemment, la mémoire 22 peut comporter des zones accessibles seulement dans le mode réservé. En outre, la taille étendue du contenu à partir duquel les signatures sont calculées rend particulièrement difficile une écriture frauduleuse d'un tel contenu qui soit susceptible de produire une signature CUR proche de la signature INIT.

Le dispositif de sélection a été représenté comme comprenant des moyens de calcul 16 et de commande 18 distincts. En variante, les moyens de calcul 16 et de commande 18 pourront être mis en oeuvre sous forme logicielle à l'aide d'un microprocesseur, par exemple le microprocesseur 20 de la figure 3.

La figure 4 illustre un exemple de contenu initial de la mémoire 12 ou 22 programmable après fabrication et du contenu correspondant de la mémoire morte 14 du dispositif de la figure 2 ou 3. Dans l'exemple illustré, la mémoire 12 est divisée en 128 sous-zones ou mots de données de 4 bits pouvant prendre chacun l'une de seize valeurs comprises entre 0 et 15. La signature INIT est un ensemble de seize nombres correspondant chacun respectivement au nombre de mots de la mémoire 12 ayant initialement l'une des seize valeurs 0 à 15. Dans l'exemple illustré, 2 mots de données ont la valeur initiale 1, 6 mots de données la valeur initiale 2, 3 mots de données la valeur initiale 14 et les 117 autres mots de donnée ont la valeur initiale 0. La signature INIT stockée dans la mémoire morte 14 est, du rang le plus faible au rang le plus fort, l'ensemble de nombres : 117, 2, 6, 0, 0, 0, 0, 0, 0, 0, 0, 0, 0, 0, 3, 0. En pratique, la mémoire 12 pourra comporter un nombre différent de mots ayant une autre taille et pouvant prendre chacun une pluralité de valeurs différentes. La mémoire morte 14 sera choisie de manière à stocker une signature INIT comportant, de préférence, autant de nombres qu'il y aura de valeurs différentes de mots. Chaque nombre stocké en mémoire morte 14 a une valeur maximale égale au nombre de mots de la mémoire 12.

La signature CUR est semblable à la signature INIT. Dans l'exemple illustré, la signature CUR est un ensemble de seize nombres correspondant chacun au nombre de mots courants de la mémoire 12 ayant l'une des seize valeurs 0 à 15. Pour calculer la signature CUR, le moyen de calcul 16 lit la valeur de chaque mot de la mémoire 12 et compte le nombre d'occurrences de chacune des valeurs. Selon un mode de réalisation de l'invention, le moyen de commande 18 calcule la différence entre les signatures INIT et CUR en soustrayant les nombres de même rang des deux signatures, et en ajoutant les valeurs absolues des différentes soustractions. La structure des moyens 16 et 18, à la portée de l'homme du métier, n'est pas décrite.

La taille réduite des signatures INIT et CUR selon l'invention est telle que la taille de la mémoire morte 14 est réduite par rapport à la taille de la mémoire 12. De même, le moyen 16 de calcul de la signature CUR et le moyen de commande 18 de traitement des signatures peuvent avoir une structure relativement simple et une taille réduite. Il découle de cela que le dispositif 10 ou 24 de sélection occupe une surface de puce réduite, ce qui constitue un avantage supplémentaire de l'invention.

Un type particulier de signature, et un moyen particulier de mesure de la différence entre les signatures ont été décrits, mais l'invention s'adaptera sans difficulté à toute signature et toute mesure de différence de signature équivalentes.

Le contenu initial de la mémoire 12 est déterminé par divers paramètres tels que la taille et la structure de la mémoire 12, ainsi que le déroulement de son processus de fabrication. Il est difficile de prévoir quel sera le contenu initial de la mémoire 12 avant que celle-ci ne soit fabriquée. D'autre part, le stockage de la signature INIT dans la mémoire morte 14 est classiquement mis en oeuvre au moyen d'un masque de métallisation lors d'une étape dite de programmation de ROM. Il est ainsi préférable, pour mettre en oeuvre la présente invention, de mesurer le contenu initial de la mémoire 12 au cours de la fabrication du dispositif.

L'invention tire profit du fait qu'après fabrication, plusieurs mémoires programmables non volatiles identiques fabriquées sur une même plaquette (avec un même procédé) ont sensiblement un même contenu initial.

Ainsi, selon la présente invention, on utilise de préférence des lots dits de caractérisation (destinés à être ensuite détruits) pour déterminer statistiquement le contenu initial des mémoires non-volatiles. On détermine ainsi la signature INIT que l'on stocke dans les mémoires mortes des lots dits de production (destinés à faire partie des produits finis) fabriqués par le même procédé.

En pratique, le contenu initial de chaque mémoire 12 d'un même lot peut être légèrement différent du contenu mesuré sur la ou les mémoires témoins, par exemple du fait d'aléas de fabrication. Le seuil du moyen de commande 18 est ainsi de préférence choisi en fonction de la taille, de la structure et du procédé de fabrication de la mémoire 12 de telle manière que de telles différences ne déclenchent pas une inactivation du signal SEL.

L'évaluation de la valeur initiale des mémoires programmables des circuits d'une plaquette en une ou quelques mesures sur des mémoires témoin est rapide et n'est pas susceptible d'endommager les circuits, ce qui constitue un avantage supplémentaire de l'invention.

Bien entendu, la présente invention est susceptible de diverses variantes et modifications qui apparaîtront à l'homme du métier. En particulier, un plus grand nombre de modes de fonctionnement peut être prévu. Le mode réservé peut ainsi être subdivisé en une pluralité de sous-modes réservés. A titre d'exemple, chaque sous-mode réservé peut correspondre à une signature de contenu courant plus ou moins proche de la signature de contenu initial, accordant à l'utilisateur des droits d'autant plus grands que la signature de contenu courant est proche de la signature de contenu initial. De plus, le mode utilisateur pourra être divisé en plusieurs sous-modes de fonctionnement dont la sélection pourra être commandée de manière classique par logiciel ou par une activation de broches particulières.

En outre, la signature de contenu courant pourra être calculée de manière périodique lorsque le circuit est sous tension.

Par ailleurs, la présente invention s'adaptera sans difficulté à toute structure de bloc fonctionnel ayant un fonctionnement équivalent.

En outre, on pourra prévoir un dispositif de sélection comparant une pluralité de signatures de contenu initial de plusieurs mémoires ou zones de mémoire à une pluralité correspondante de signatures de contenu courant de plusieurs mémoires ou zones de mémoire. Une combinaison des modes de réalisation des figures 2 et 3 est également à la portée de l'homme du métier.

Dans le cas où la mémoire programmable du dispositif selon l'invention est une mémoire ou zone mémoire qui n'est accessible que dans le mode réservé, dans laquelle on vient écrire une valeur prédéterminée pour sortir du mode réservé, la valeur prédéterminée sera choisie de toute manière appropriée. A titre d'exemple, il est possible de calculer cette valeur à partir du contenu initial et de la stocker dans le circuit.

L'homme du métier adaptera sans difficulté l'invention à un dispositif utilisant seulement une partie accessible en permanence de la mémoire programmable du bloc fonctionnel.

Enfin, le bloc fonctionnel pourra mettre en oeuvre un niveau de sécurité supplémentaire tel qu'un test d'authentification effectué à chaque mise sous tension pour laquelle le signal SEL est actif.

## Revendications

1. Dispositif (10 ; 24) de sélection de mode de fonctionnement d'un circuit intégré comprenant :
une mémoire non-volatile (12 ; 22) programmable après fabrication ;
un moyen de stockage (14) d'une première signature (INIT) représentative du contenu de la mémoire (12 ; 22) ;
un moyen de calcul (16) d'une seconde signature (CUR) représentative du contenu de la mémoire (12 ; 22) ; et
un moyen (18) pour évaluer la différence existant entre les signatures (INIT, CUR) et pour inactiver un signal (SEL) de sélection de mode de fonctionnement lorsque la différence est supérieure à un seuil prédéterminé, **caractérisé en ce que** la mémoire (12 ; 22) est divisée en sous-zones pouvant chacune prendre l'une quelconque d'une pluralité de valeurs, et **en ce que** :
la première signature (INIT) comprend le nombre d'occurrences initiales avant programmation de chacune de la pluralité de valeurs dans lesdites sous-zones ; et
la seconde signature (CUR) comprend le nombre d'occurrences courantes de chacune de la pluralité de valeurs dans lesdites zones.

2. Dispositif de sélection selon la revendication 1, dans lequel le moyen (18) pour évaluer la différence existant entre les signatures (INIT, CUR) calcule les différences des nombres d'occurrences respectives de chacune de la pluralité de valeurs dans les première et seconde signatures et fait la somme des valeurs absolues des différences.

3. Circuit intégré (9 ; 19) comportant un dispositif de sélection (12 ; 22) selon l'une quelconque des revendications précédentes, fonctionnant dans un premier mode tant que le signal de sélection de mode de fonctionnement (SEL) est actif, et dans un deuxième mode sinon.

4. Circuit intégré selon la revendication 3, dans lequel au moins une partie de la mémoire du dispositif de sélection est une mémoire ou zone mémoire (12) qui ne peut être écrite que dans le premier mode de fonctionnement.

5. Circuit intégré selon la revendication 3 ou 4, dans lequel la seconde signature (CUR) est calculée de nouveau à chaque mise sous tension du circuit.

6. Procédé de sélection de mode de fonctionnement d'un circuit intégré (9 ; 19) comportant une mémoire non-volatile (12 ; 22) programmable après fabrication, comprenant les étapes suivantes :
- lors de la fabrication du circuit, stocker une première signature (INIT) représentative du contenu dans un moyen de stockage (14) ; et
- après fabrication du circuit, calculer de manière commandable une seconde signature (CUR) représentative du contenu de la mémoire (12 ; 22), évaluer la différence existant entre les première et seconde signatures et inactiver un signal de sélection (SEL) de mode de fonctionnement lorsque la différence est supérieure à un seuil prédéterminé, **caractérisé en ce que** :
la première signature (INIT) comprend le nombre d'occurrences initiales avant programmation de chacune d'une pluralité de valeurs que peuvent prendre des sous-zones de la mémoire ; et
la seconde signature (CUR) comprend le nombre d'occurrences courantes de chacune de la pluralité de valeurs dans lesdites sous-zones.

7. Procédé selon la revendication 6, dans lequel l'évaluation de la différence entre les signatures s'effectue en calculant les différences des nombres d'occurrences respectives de chacune de la pluralité de valeurs dans les première et seconde signatures et en faisant la somme des valeurs absolues des différences.

## Claims

1. A device (10; 24) for selecting the operating mode of an integrated circuit, comprising:
a field-programmable non-volatile memory (12; 22);
means (14) for storing a first signature (INIT) representative of the content of the memory (12; 22);
means (16) for calculating a second signature (CUR) representative of the content of the memory (12; 22); and
means (18) for evaluating the difference between the signatures (INIT, CUR) and for deactivating an operating mode selection signal (SEL) when the difference is greater than a predetermined threshold, **characterized in that** the memory (12; 22) is divided into sub-areas that can each take any one of a plurality of values; and
the first signature (INIT) comprises the number of initial occurrences of each of the plurality of values in said sub-areas; and
the second signature (CUR) comprises the number of current occurrences of each of the plurality of values in said sub-areas.

2. The selection device of claim 1, wherein the means (18) for evaluating the difference between signatures (INIT, CUR) calculates the differences of the number of respective occurrences of each of the plurality of values in the first and second signatures and sums up the absolute values of the differences.

3. An integrated circuit (9; 19) comprising a selection device (12; 22) according to any of the above claims, operating in a first mode as long as the operating mode selection signal (SEL) is active, and in a second mode otherwise.

4. The integrated circuit of claim 3, wherein at least part of the memory of the selection device is a memory or a memory area (12) which can only be written into in the first operating mode.

5. The integrated circuit of claim 3 or 4, wherein the second signature (CUR) is calculated again each time the circuit is powered on.

6. A method for selecting the operating mode of an integrated circuit (9; 19) comprising a field-programmable non-volatile memory (12; 22), comprising the steps of:
- upon manufacturing of the circuit, storing a first signature (INIT) representative of the content in a storage means (14); and
- after manufacturing of the circuit, controllably calculating a second signature (CUR) representative of the content of the memory (12; 22), evaluating the difference existing between the first and second signatures, and deactivating an operating mode selection signal (SEL) when the difference is greater than a predetermined threshold, **characterized in that**:
the first signature (INIT) comprises the number of initial occurrences of each of the plurality of values in said sub-areas; and
the second signature (CUR) comprises the number of current occurrences of each of the plurality of values in said sub-areas.

7. The method of claim 6, wherein the evaluation of the difference between signatures is made by calculating the number of respective occurrences of each of the plurality of values in the first and second signatures and summing up the absolute values of the differences.

## Patentansprüche

1. Eine Vorrichtung (10; 24) zum Auswählen des Betriebsmodus von einer integrierten Schaltung, wobei die Vorrichtung Folgendes aufweist:
einen feldprogrammierbaren, nicht-flüchtigen Speicher (12; 22);
Mittel (14) zum Speichern einer ersten Signatur (INIT) repräsentativ für den Inhalt von dem Speicher (12; 22);
Mittel (16) zum Berechnen einer zweiten Signatur (CUR), repräsentativ für den Inhalt von dem Speicher (12; 22); und
Mittel (18) zum Evaluieren der Differenz zwischen den Signaturen (INIT, CUR) und zum Deaktivieren eines Betriebsmodusselektionssignals (SEL), wenn die Differenz größer ist als eine vorherbestimmte Schwelle, **gekennzeichnet dadurch dass**,
der Speicher (12; 22) in Untergebiete bzw. Sub-Areale geteilt ist, die jeweils irgendeinen von einer Vielzahl von Werten annehmen können; und
die erste Signatur (INIT) die Anzahl von anfänglichen Häufigkeiten von jedem von der Vielzahl von Werten in den Sub-Arealen aufweist; und
die zweite Signatur (CUR), die Anzahl von aktuellen Häufigkeiten von jedem von der Vielzahl von Werten in den Sub-Arealen aufweist.

2. Selektionsvorrichtung nach Anspruch 1, wobei die Mittel (18) zum Evaluieren der Differenz zwischen den Signaturen (INIT, CUR) die Differenzen von der Anzahl von entsprechenden Häufigkeiten von jedem von der Vielzahl von Werten in den ersten und zweiten Signaturen berechnen und die absoluten Werte von den Differenzen aufsummieren.

3. Eine integrierte Schaltung (9; 19), die eine Selektionsvorrichtung (12; 22) gemäß irgendeinem der vorhergehenden Ansprüche aufweist, betrieben in einem ersten Modus, solang das Betriebsmodusselektionssignal (SEL) aktiv ist, und andernfalls betrieben in einem zweiten Modus.

4. Integrierte Schaltung nach Anspruch 3, wobei wenigstens ein Teil von dem Speicher von der Selektionsvorrichtung ein Speicher oder ein Speicherareal (12) ist, in welchen bzw. welches nur in dem ersten Betriebsmodus geschrieben werden kann.

5. Integrierte Schaltung nach Anspruch 3 oder 4, wobei die zweite Signatur (CUR) jedesmal wieder berechnet wird, wenn die Schaltung eingeschaltet bzw. hochgefahren wird.

6. Ein Verfahren zum Auswählen des Betriebsmodus von einer integrierten Schaltung (9; 19), einen feldprogrammierbaren nicht-flüchtigen Speicher (12; 22) aufweisend, wobei das Verfahren die folgenden Schritte aufweist:
beim Herstellen von der Schaltung Speichern einer ersten Signatur (I-NIT), die für den Inhalt repräsentativ ist, und zwar in einem Speichermittel (14); und
nach dem Herstellen von der Schaltung, steuerbar eine zweite Signatur (CUR) Berechnen, die repräsentativ ist für den Inhalt von dem Speicher (12; 22), Evaluieren der Differenz, die zwischen den ersten und zweiten Signaturen existiert und Deaktivieren eines Betriebsmodusselektionssignals (SEL), wenn die Differenz größer als eine vorherbestimmte Schwelle ist, **gekennzeichnet dadurch dass**
die erste Signatur (INIT) die Anzahl von anfänglichen Häufigkeiten von jedem von der Vielzahl von Werten in den Sub-Arealen aufweist; und
die zweite Signatur (CUR) die Anzahl von aktuellen Häufigkeiten von jedem von der Vielzahl von Werten in den Sub-Arealen aufweist.

7. Verfahren nach Anspruch 6, wobei die Evaluierung von der Differenz zwischen Signaturen durchgeführt wird durch Berechnen der Anzahl von entsprechenden Häufigkeiten von jedem von der Vielzahl von Werten in den ersten und zweiten Signaturen und Aufsummieren der absoluten Werte von den Differenzen.
